# EUROPEAN PATENT SPECIFICATION

(11) **EP 1 925 198 B1**
(45) Date of publication and mention of the grant of the patent: **21.03.2018**
(21) Application number: 07075910.5
(22) Date of filing: 23.10.2007
(51) Int. Cl.: A01D 75/18, A01D 34/66

(54) **Device for performing an agricultural operation**
Vorrichtung zum Ausführen eines landwirtschaftlichen Arbeitsgangs
Dispositif pour la réalisation d'une opération agricole

(30) Priority: 27.11.2006 NL 1032946
(43) Date of publication of application: 28.05.2008
(73) Proprietor: Maasland N.V., 3147 PA Maassluis (NL)
(72) Inventor: Oudemans, Jelle Fredo, 2545 DK Den Haag (NL)
(74) Representative: AGCO Intellectual Property Department

(56) References cited:
- EP-A1- 0 679 327
- EP-A1- 1 300 065
- US-A- 4 854 112

## Description

The present invention relates in general to a device for performing an agricultural operation in a direction of operation, and in particular processing crop lying on the ground.

The invention relates in particular to a device for processing crop lying on the ground, in a direction of operation, wherein the device comprises a frame with a lifting actuator, a lifting hinge and at least one sub-frame with at least one crop processing element, wherein the frame is capable of being coupled to a vehicle, and wherein the sub-frame is displaceable by means of the lifting actuator about the lifting hinge between a substantially horizontal operative position and a transport position being at an angle thereto in a vertical plane, wherein at least the sub-frame is pivotable about a break-out hinge from the operative position to a broken out position under the action of a break-out force acting substantially against the direction of operation, the broken out position being at an angle to the operative position in a horizontal plane, wherein the device further comprises a readjusting actuator, the break-out hinge being readjustable by means of the readjusting actuator from a broken out hinge position belonging to the broken out position of the sub-frame to an operative hinge position belonging to the operative position of the sub-frame. It is pointed out here that a readjusting hinge may be provided between the sub-frame and the frame, or for example between the frame and an agricultural vehicle. Furthermore, the various hinge positions may be assumed in every sub-frame position.

Document EP 1 300 065 discloses a mowing device capable of being coupled to an agricultural vehicle, with cutting elements. The mowing device is capable of being folded up by means of a pressure cylinder via a suspension. Moreover, the mowing device may break out if an obstacle is met and may also tilt in that case, in which case the front side of the mowing device will be at a higher level than the back side. By means of another pressure cylinder the mowing device may subsequently be readjusted.

This known device has a drawback. During operation the device will break out when an obstacle is met. As a result thereof, the mowing properties, for example the mowing height or the mowing width, may change. However, this breaking out is not always properly noticed, because the break-out angle or, possibly, the change in height is often only small if, for example, a relatively small obstacle is met. Nevertheless, the mowing result may be influenced negatively, which is undesirable.

The present invention aims at providing a device of the type mentioned in the preamble, by means of which a more reliable operation result is obtained.

This object is achieved by means of a device according to claim 1, which is characterized in that the lifting actuator and the readjusting actuator are operatively coupled in such a way that, when the lifting actuator is switched on, the readjusting actuator is also switched on automatically. This ensures that the device, at least the sub-frame thereof, will be in the correct operative position, in each case after a lifting action has been performed. Such a lifting action may be performed, for example, at each turning (pivoting) of the device, at driving around an observed obstacle, etc. It is important that, by means of the invention, the risk of (continuing) driving with the device in the broken out position has been reduced.

Another very important advantage of the invention is constituted by an inherent safer driving behaviour in the folded up position of the device. In the transport position of the device, an event having the same impact on the device as an obstacle may still occur, of course. For example, when driving through a hole or other unevenness, the device might also get into the broken out position. This may lead to dangerous situations because of undesired deflection of the device. The invention may prevent this by forcing the device into the operative position, because it is necessary to switch on the lifting actuator for the purpose of folding up. As a result thereof, necessarily, either the readjusting actuator is switched on and the device, or at least the sub-frame, is brought into the operative position, or it is locked, if this was already the current position. Advantageously, the lifting actuator, and, consequently, preferably also the readjusting actuator, may be secured in the energized position.

Within the scope of this invention by "operatively coupled" is meant that the lifting actuator and the readjusting actuator do not necessarily have to be coupled physically, but only in as far as their operation is concerned. "Switching on" further comprises "operating", "activating", "energizing" or the like. Furthermore, it is pointed out that either the sub-frame, or the sub-frame in combination with the frame, may be capable of breaking out.

Furthermore, the device is not limited to a mowing device, but may comprise in principle a device for an arbitrary agricultural operation, which is supposed to comprise in this context a soil processing operation and a crop processing operation. Soil processing operations may comprise themselves both a mechanical soil processing operation and the supply of a material such as a fertilizer. A crop processing operation may comprise a mechanical crop processing operation, such as mowing or harvesting in another way, but also the supply of a material to a crop, such as spraying. However, the device comprises to great advantage a mowing device, because the operation often takes place close to the ground surface, in which case many obstacles may be overlooked. Meeting such an obstacle produces a relatively great difference in force with respect to an undisturbed processing operation, and thus influences to a relatively great extent the stability of the device, at least of a vehicle provided with said device. Breaking out is here of great importance.

Examples of advantageous embodiments of the invention are described in the sub-claims.

In particular, the lifting actuator comprises a first pressure cylinder and the readjusting actuator comprises a second pressure cylinder, which pressure cylinders are operatively coupled. These are reliable and simply couplable means for both producing and absorbing the great occurring forces. Other means are, for example, electric motors or mechanical connections.

Advantageously, the first pressure cylinder and the second pressure cylinder each comprise a hydraulic cylinder with a chamber for hydraulic medium, which chambers are mutually connectable, and preferably mutually connected. Mutually connecting, at least the possibility of mutually connecting, chambers for hydraulic medium ensures the creation of one hydraulic circuit, so that the lifting actuator and the readjusting actuator are physically coupled. Of course, it is also possible to provide a control unit which, if an operating person gives a command to switch on the lifting actuator, also switches on the readjusting actuator. In this case, the actuators, at least the respective chambers for hydraulic medium, do not have to be mutually connected. Incidentally, the latter embodiment also works in the case of other actuators than (hydraulic) pressure cylinders. Please, also notice that the medium might also be a gas, so that, in that case, the cylinder in question is a pneumatic cylinder. It is pointed out that in this text by "pressure cylinder" are meant both a cylinder that retracts when being energized and a cylinder that extends when being energized, the latter also being designated per se as "pressure cylinder". The first one is also called "pulling cylinder".

In one embodiment, the readjusting actuator comprises a spring means that is designed to readjust by means of the readjusting actuator the break-out hinge automatically from the broken out hinge position to the operative hinge position. This provides a particularly reliable device that automatically readjusts by itself the broken out position to the operative position. If there is met an obstacle that prevents this automatic readjustment, for example if an object is dragged along, the friction being so great that the readjusting force that can be generated by the spring means is not capable of overcoming it, a lifting action may often be a solution. By lifting, it is often possible to obviate the friction, at least to reduce the friction to a considerable extent, so that the spring means is then given the chance to restore the operative position.

The spring means is not particularly limited and comprises in one embodiment a mechanical spring or a gas spring. In special cases, the spring means might also be magnetic, electric, etc.

In a preferred embodiment, the spring means is adjustable. This makes it possible to adapt the device to, for example, different terrains or types of obstacles.

The frame is advantageously designed to be coupled to a three-point linkage. This means that the device is capable of being coupled in a simple manner to, for example, an agricultural vehicle. These are usually provided with a three-point linkage, frequently even with a standardized three-point linkage. Other ways of coupling are, of course, possible as well.

In one embodiment, the frame comprises at least two coupling joints, each of which is designed to be coupled to one of two lower coupling points of a three-point linkage.

In one embodiment, the device further comprises at least one lifting device that is operatively coupled to the break-out hinge and that is designed to move at least a part of the sub-frame upward upon pivoting to the broken out position. This upward movement provides the advantage that an obstacle, if any, may be overcome in a simpler manner. Incidentally, for this purpose, an upward movement is not necessary, because the breaking out, that is to say a sideward movement, may be sufficient to cause the device to slide along the obstacle or the like.

The lifting device may be designed, for example, as described in the aforementioned document EP 1 300 065. Another embodiment of a lifting device comprises, for example, a spring being under pretension that is prevented by means of a locking cam from moving the element connected thereto, for example the sub-frame, upward. In case of sufficient resistance, the catch will unlock the spring, which will then move the element upward, for example while tilting it partially. It is also possible to provide any active lifting device which is controlled, for example, by a signal that is generated in case of breaking out. Please notice that, for example but not exclusively in the latter embodiment, the lifting device does not have to be physically connected to the break-out hinge.

Instead of the locking cam, a hydraulic cylinder, for example, may also provide a permanent back pressure. If this back pressure is overcome by an obstacle, the cylinder will retract, after which it is possible for the device to break out. Incidentally, the pressure may change by extending or retracting the cylinder. Moreover, it is possible to remove the pressure on this hydraulic cylinder as soon as the back pressure has been overcome, for example because an obstacle has caused the device to break out. In this case, the hydraulic system should preferably be independent of any hydraulic system of a lifting device or a ground pressure relieving device. On the other hand, in the above described situation it is also advantageous to maintain the pressure. For it will be possible for the cylinder to repress the broken out device to the initial position.

Furthermore, the lifting does not have to take place parallel to the ground, and it is also possible, for example, only to lift, i.e. to tilt, the front side, viewed in the direction of operation, or an end of the sub-frame.

In a special embodiment, the lifting device and the break-out hinge are integrated. This means that in that case the break-out hinge constitutes part of the lifting device. In that case, the break-out hinge may also allow a lifting movement. A limited number of components and a rather compact device are thus possible. Incidentally, the lifting device will often comprise a hinge, but alternatively, for example, also one or more pressure cylinders or the like.

In a special embodiment, the two coupling joints are pivotable about respective substantially parallel axles, in particular hingeable in opposite directions, the sub-frame being tiltable. This is an elegant and robust embodiment, which is capable of tilting the sub-frame, in particular of lifting that end of the sub-frame that is remote from the vehicle, and which, nevertheless, consists of reliable and heavy duty components. For example, but not exclusively, this embodiment may be produced using twice the spring locked by means of a cam and the tilting mechanism, described above, the tilting taking place in opposite directions, the arrangement being such that for the coupling facing the end of the sub-frame the fixedly positioned hinge is located below the variably positioned hinge, whereas for the opposite coupling the fixedly positioned hinge is located above the variably positioned hinge. An advantage thereof is that the sub-frame, and in particular its end, is lifted to the maximum extent and that, as a result, there is an optimum chance of overcoming the obstacle.

In particular, the device further comprises a force lever limiter that is designed to pivot the break-out hinge from the operative position to the broken out position only if a force lever of the break-out force exceeds a predetermined value with respect to the break-out hinge. Such a force lever limiter prevents the (sub)frame from breaking out too quickly when there is no actual obstacle.

The force lever limited preferably comprises a pressure relief valve, which is a simple and reliable solution in the case of hydraulic or pneumatic systems, or a mechanical or gas spring.

Advantageously, the force lever limiter has an adjustable value. This makes it possible to adapt the breaking out limit to, for example, the crop to be mown, the terrain condition or otherwise.

The invention also provides a vehicle provided with at least one device according to the invention. A vehicle provided with the device according to the invention has the advantages already known per se of being able to break out, namely a smaller risk of damage, and a more stable and safer driving behaviour, which is in particular important in the case of dangerous terrains, for example terrains bordering ravines and watersides, etc. Furthermore, the invention provides the advantages already mentioned above of a more reliable performance of the processing operation, that is to say with a smaller risk of a broken out position continuing unnoticed.

The invention provides in particular a vehicle wherein the device has a processing surface that extends only at one side to beyond a side of the vehicle. In the case of such asymmetric vehicles, even a small obstacle may have a great effect on the stability, and an optimum device is important for safety and efficiency.

The device used in the vehicle is not limited otherwise than already indicated above, but comprises at least one device, preferably a mowing device. In particular with mowing devices, there is often made use of asymmetric machines, for example for mowing watersides, slopes, or the like.

However, the invention is, of course, not limited to asymmetric devices. It is possible, for example, to provide a vehicle with two, or even more, of such devices in order to obtain, for example, a very great mowing width. If embodiments according to the invention are chosen for these devices, the advantages of the invention show up particularly well with such mowing devices and other devices for performing operations.

The invention will be explained hereinafter in further detail with reference to some embodiments shown in the drawing, in which:
Figure 1 is a diagrammatic top view of a first embodiment of the device according to the invention;
Figure 2 is a front view of the embodiment according to Figure 1, in a transport position;
Figure 3 is a top view of the embodiment according to Figure 1, in a broken out position.

The characteristics shown in the figures only serve as examples and are not intended to be limiting, but only to elucidate the invention.

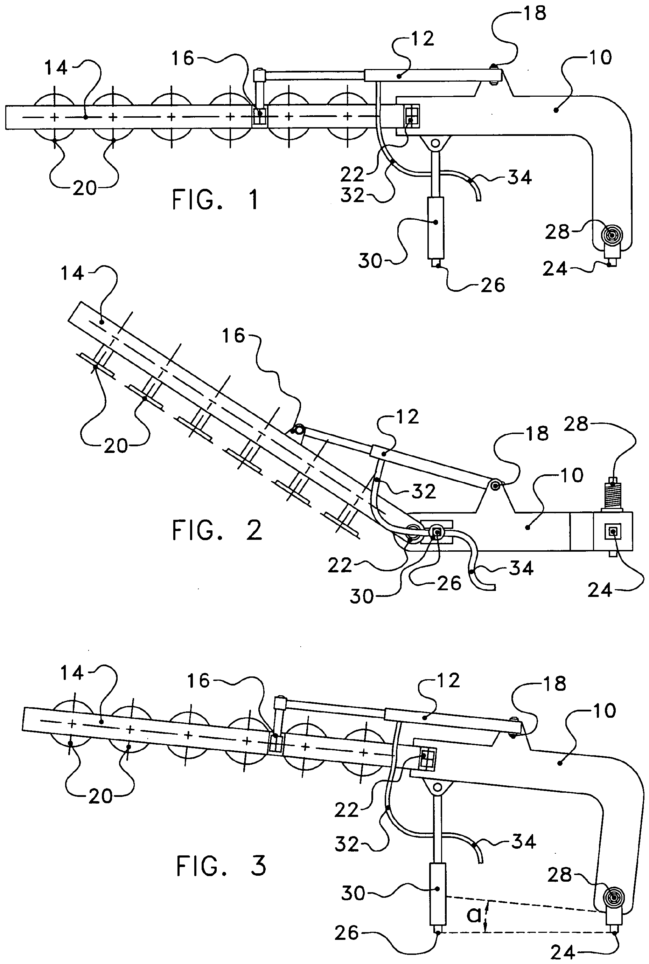

Figure 1 is a diagrammatic top view of a first embodiment of the device according to the invention. It is pointed out that in the whole drawing the figures are not necessarily depicted to scale. Furthermore, corresponding components are denoted by the same reference numerals, provided, if necessary, with a sub-indication in the form of one or more marks or letters.

In Figure 1, 10 denotes a frame, and 14 denotes a sub-frame with cutting devices 20. A lifting cylinder 12 connects the sub-frame, tiltably about the lifting hinge 22, to the frame 10, by means of two connecting hinges 16 and 18.

The frame 10 is coupled to a vehicle (not shown) by means of first and second vehicle couplings 24 and 26. The frame 10, and thus in fact the whole device, is capable of breaking out relative to the vehicle about the break-out hinge 28 and readjustable by means of the readjusting cylinder 30. The cylinders 12 and 30 are operatively hydraulically coupled to the hydraulic hose 32, while the hydraulic hose 34 forms a connection with a non-shown hydraulic pressure control.

The shown, very simple embodiment here comprises six cutting devices, although any other number is also possible, as well as, in principle, every type of soil processing or crop processing means, but substantially mowers or the like. Likewise, other lifting and/or readjusting means, such as electric motors, are possible. Furthermore, it may be chosen to dispose the break-out hinge 28 on the second vehicle coupling 26, and to dispose the readjusting cylinder 30 on the first vehicle coupling 24. The readjusting cylinder has then preferably an extended position in the unloaded, not broken out condition.

The shown breaking out possibility of the frame and the associated readjusting cylinder may also be limited to the sub-frame. For this purpose, a break-out hinge should be disposed between the sub-frame 14 and the frame 10, for example at the place of and, if desired, integrally with the lifting hinge 22. The readjusting cylinder should then be disposed between the frame 10 and the sub-frame 14. An advantage of this embodiment is that the frame itself may be of a simpler and often also stronger construction.

The operation of the device will be explained in further detail with reference to Figures 2 and 3.

In Figure 2, which shows the embodiment according to Figure 1 in front view, in a transport position, the lifting cylinder 12 is operated by retracting. This is achieved by increasing the hydraulic pressure, by means of hydraulic hoses 34 and 32. In the transport position, the sub-frame is at an angle to the horizontal by tilting about the lifting hinge 22, advantageously over substantially at least 60°, or even more than 60°. As shown here, at high(er) hydraulic pressure, it is possible to force the readjusting cylinder 30 into its retracted position or to keep it in this position. This will always occur when the cylinder 12 should be operated.

Figure 3 is a top view of the embodiment according to Figure 1, in a broken out position. In the broken out position, the frame 10, and thus in fact the whole device, is at an angle α to a plane perpendicular to an intended normal direction of travel of the non-shown vehicle, or in other words, to the not broken out position. This occurs, for example, because during operation the cutting devices 20 meet an obstacle which exerts a force on the sub-frame 14. Due to this, the readjusting cylinder 30 is forced into its extended position, in which the frame 10 breaks out about the break-out hinge 28. This does not only prevent damage of the device and/or the vehicle, but also a possibly dangerous deflection or deviation from the intended path of the vehicle.

If the device has broken out, it is recommendable, of course, to readjust it again to the not broken out position. For this purpose, the readjusting cylinder 30 should be energized by means of the hydraulic hose 34. According to the invention, it is advantageous, although not necessary, to couple the lifting cylinder 12 operatively to the readjusting cylinder 30 by means of the hydraulic hose 32, so that, when the readjusting cylinder 30 is energized, when making a bend or preparing for transport, the broken out position is always corrected to the not broken out position and the latter position is locked under hydraulic pressure.

Also provided is another embodiment of the device according to the invention.

The device now comprises a break-out hinge and a second or auxiliary break-out hinge. Moreover, it comprises a sub-frame support element which is connected by means of an adjusting spring to a beam which is provided with an upper vehicle coupling. The readjusting cylinder is fastened to a fastening plate. The device further comprises a lock with a lock spring which serve as an adjustable break-out protection. The cutting device is now a single mower. Please note that the device may also be provided with a second mower which is disposed mirror symmetrically.

The sub-frame is liftable/tiltable by means of the retractable and extendable lifting cylinder, it being possible to adjust, by means of the sub-frame support element and the adjusting spring, an adjustable ground pressing force, i.e. the force with which the mower moves over the ground.

It is pointed out that, instead of the adjusting spring, there may also be used a hydraulic cylinder which provides a (preferably adjustable) at least substantially permanent pressure, for the purpose of ground pressure relief. At least a hydraulic accumulator may be connected thereto, for that purpose. This offers in particular advantages if a hydraulic cylinder is also used in the case of the break-out device, in particular as a replacement for the locking cam. Namely, by interconnecting the pressure chambers of these two hydraulic cylinders in a proper manner, the following advantage may be obtained. If the break-out protection comes into operation, this means that the back pressure of the hydraulic cylinder operating as locking cam is overcome. Hydraulic medium is then pressed out of that cylinder, and in particular to the pressure chamber of the other hydraulic cylinder, at least the accumulator controlling it, where the (hydraulic) pressure will increase. If it is ensured that said cylinder will lift the device to a greater extent at increasing pressure, this will provide an additional protection. For, the obstacle ensuring the break-out will, as a result thereof, ensure an additional lifting action. It is emphasized here that this coupling of the hydraulic cylinder of the break-out protection and that for the ground pressure relief will also have inventive value, apart from the coupling of the readjusting actuator and the lifting actuator.

The device as a whole is capable of being coupled to a vehicle with three-point linkage, such as a tractor, by means of the vehicle couplings as well as the upper vehicle coupling. This coupling is, in the context of this invention, rigid relative to the vehicle, although the frame has some movability relative to the vehicle.

The device, i.e. the frame with all other components, is capable of breaking out about the break-out hinge and, if desired, the second or auxiliary break-out hinge, and may be readjusted by means of the readjusting cylinder. The break-out protection here comprises a lock with a lock spring around a lock spring guide means, and serves to cause the device to break out only after a torque (or force) exerted on the device by an obstacle exceeds a particular threshold. The mechanism and the mode of operation of breaking out, readjusting and the lock (break-out protection) will be explained in further detail with reference to the now following figures which show further details and/or other views.

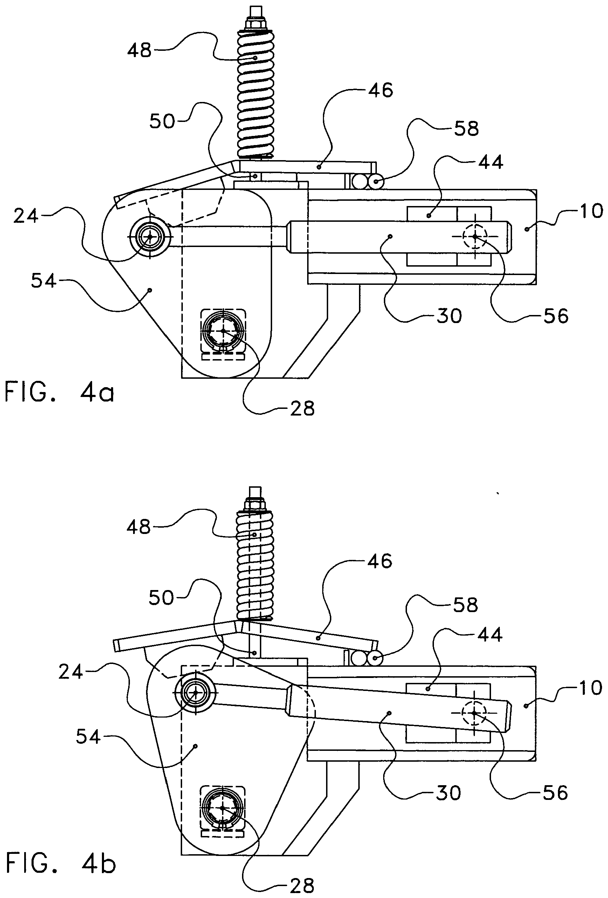

Figures 4a and b show a detail of the embodiment in a right hand side view, in a normal not broken out position, and a broken out position, respectively.

Besides the already mentioned components, a first coupling house and a second coupling house are provided. The second coupling house is denoted by reference numeral 54. Furthermore, there is depicted in Figures 4a and b a hinge 56, about which the readjusting cylinder 30 is capable of pivoting, as well as a lock stop 58, which may also be, for example, a hinge or the like, as long as the movement of the lock 46 backward, this is to the right in the figures, is counteracted.

Figure 4a shows the not broken out position, in which the readjusting cylinder 30 is in the extended and also floating position, thus without the cylinder 30 being energized. If the device, for example a not shown mowing device, is now driven against an obstacle, a force will act on the device. This force develops a torque that will be inclined to tilt at least the frame 10 about the line of the "fixed" points constituted by the upper vehicle coupling and the vehicle coupling 26 (neither of the two shown here). In that case, provided the torque is sufficiently great, the spring 48 will be pressed, as a result of which the lock 46 will be unlocked. It will then be possible for the readjusting cylinder 30 to retract, as a result of which the frame 10 and the second coupling house 54 will pivot relative to each other. The frame 10 will then move downward relative to the fixed point 24, which is indeed rigidly connected to the vehicle. Due to the fact that, moreover, the vehicle coupling 26 has been considered as a fixed point, also connected to the vehicle, the other side of the frame will move upward to some extent; this is also advantageous to overcoming the obstacle.

Moreover, the frame 10 has pivoted to some extent in the horizontal plane, and in particular the end of the frame 10 located at the side of the readjusting cylinder 30, has been displaced forward to some extent, viewed in the direction of travel. Therefore, the opposite end, located at the side of the sub-frame, has been displaced backward. The latter is advantageous when meeting the obstacle.

The situation of Figure 4b is then reached, with retracted readjusting cylinder 30, tilted second coupling house 54 and downward moved frame 10. Please note that this situation is in principle not stable, because the readjusting cylinder 30 is still floating (pressureless), although the spring force of the lock spring 48 has a somewhat limiting effect.

In order to restore the situation, it is possible to energize the readjusting cylinder 30 which will extend as a result thereof, and will slide along the lock until the vehicle coupling 24 reaches the narrower part of the lock 46, in which case the frame will reassume the position of Figure 4a. The readjusting cylinder 30 may, for example, be operated hydraulically, as also shown in Figures 1-3, in which case, according to the invention, the hydraulic coupling with the lifting cylinder not shown here is advantageous for safety reasons.

Incidentally, the readjusting cylinder 30 may, instead of or in addition to the locking device 46, 48, 50, also be provided with a gas spring, in which case a pressure created by compressing the readjusting cylinder will try to restore the initial situation. The needed gas spring details will be known to the person skilled in the art and will not be explained here in further detail.

Although the vehicle coupling 26 is considered here as a fixed point, there may additionally also be provided a second or auxiliary break-out hinge. This has, in principle, practically the same construction, with a coupling 26, first coupling house (not shown here) and auxiliary break-out hinge, as the coupling 24 with second coupling house 54 and break-out hinge 28. The only difference is that the relative positions of the vehicle coupling and the (auxiliary) break-out hinge have been changed. With reference to Figures 4a/b, the following effect may then be deduced when meeting an obstacle.

The counteracting force of the obstacle tries to push the frame 10 backward, also relative to the auxiliary break-out hinge (not shown here), that is to say tries to pivot it relative to the vehicle. It may then be taken into consideration that the upper vehicle coupling is still a fixed point, and that the vehicle coupling 24 may be taken as a second fixed point, whether or not after the latter has been pivoted completely, as described in the foregoing. All this has the net result that the first coupling house (not shown here) will tilt backward, in which case the auxiliary break-out hinge will be lifted to some extent. Here, a maximum pivoting movement should be allowed, of course, which ensures that, in the most backward pivoted position, there has in fact been made an upward movement. However, this may be achieved in a very simple manner. By means of the upward and backward movement, the break-out possibility of the frame/sub-frame is reinforced, and the net upward movement thereof is also reinforced, so that the obstacle is overcome even more easily.

The embodiments shown here are only examples, the protective scope being determined by the accompanying claims.

## Claims

1. Device for performing an agricultural operation in a direction of operation, and in particular processing crop lying on the ground,
wherein the device comprises:
a frame (10) with a lifting actuator (12), a lifting hinge (22) and at least one sub-frame (14) with at least one crop processing element (20),
wherein the frame (10) is capable of being coupled to a vehicle, and wherein the sub-frame (14) is displaceable by means of the lifting actuator (12) about the lifting hinge (22) between a substantially horizontal operative position and a transport position being at an angle thereto in a vertical plane,
wherein at least the sub-frame (14) is pivotable about a break-out hinge (28, 28') from the operative position to a broken out position under the action of a break-out force acting substantially against the direction of operation, the broken out position being at an angle to the operative position in a horizontal plane,
wherein the device further comprises a readjusting actuator (30), the break-out hinge (28, 28') being readjustable by means of the readjusting actuator (30) from a broken out hinge position belonging to the broken out position of the sub-frame (14) to an operative hinge position belonging to the operative position of the sub-frame (14),
**characterized in that** the lifting actuator (12) and the readjusting actuator (30) are operatively coupled in such a way that, when the lifting actuator (12) is switched on, the readjusting actuator (30) is also switched on automatically.

2. Device according to claim 1, **characterized in that** the lifting actuator (12) comprises a first pressure cylinder and **in that** the readjusting actuator (30) comprises a second pressure cylinder, which pressure cylinders are operatively coupled.

3. Device according to claim 2, **characterized in that** the first pressure cylinder and the second pressure cylinder each comprise a hydraulic cylinder with a chamber for hydraulic medium, which chambers are mutually connectable, and preferably mutually connected.

4. Device according to any one of the preceding claims, **characterized in that** the readjusting actuator (30) comprises a spring means that is designed to readjust the break-out hinge (28, 28') automatically from the broken out hinge position to the operative hinge position by means of the readjusting actuator.

5. Device according to claim 4, **characterized in that** the spring means comprises a mechanical spring or a gas spring.

6. Device according to claim 4 or 5, **characterized in that** the spring means is adjustable.

7. Device according to any one of the preceding claims, **characterized in that** the frame (10) is designed to be coupled to a three-point linkage.

8. Device according to claim 7, **characterized in that** the frame comprises at least two coupling joints (24, 26, 42), each of which is designed to be coupled to one of two lower coupling points of the three-point linkage.

9. Device according to any one of the preceding claims, further comprising at least one lifting device (24, 26, 28, 28', 52, 54) that is operatively coupled to the break-out hinge and that is designed to move at least a part of the sub-frame (14) upward upon pivoting to the broken out position.

10. Device according to claim 9, **characterized in that** the lifting device (24, 26, 28, 28', 52, 54) and the break-out hinge (28, 28') are integrated.

11. Device according to any one of claims 9 to 10, **characterized in that** two coupling joints (24, 26) are pivotable about respective substantially parallel axles, in particular hingeable in opposite directions, the sub-frame (14) being tiltable.

12. Device according to any one of the preceding claims, further comprising a force lever limiter (48, 50) that is designed to pivot the break-out hinge (28, 28') from the operative position to the broken out position only if a force lever of the break-out force exceeds a predetermined value with respect to the break-out hinge (28, 28').

13. Device according to any one of claims 2 to 12, **characterized in that** the force lever limiter comprises a pressure relief valve, or a preferably mechanical spring (48) or gas spring.

14. Device according to claim 13, **characterized in that** the force lever limiter (48) has an adjustable value.

15. Vehicle provided with at least one device according to any one of the preceding claims.

16. Vehicle according to claim 15, **characterized in that** the device has a processing surface that extends only at one side to beyond a side of the vehicle.

17. Vehicle according to claim 15 or 16, **characterized in that** at least one device comprises a mowing device (20).

## Patentansprüche

1. Vorrichtung zum Ausführen eines landwirtschaftlichen Vorgangs in einer Vorgangsrichtung und insbesondere Verarbeiten von auf dem Boden liegendem Erntegut, wobei die Vorrichtung Folgendes aufweist:
einen Rahmen (10) mit einem Hebeaktuator (12), einem Hebegelenk (22) und mindestens einem Unterrahmen (14) mit mindestens einem Erntegutverarbeitungselement (20),
wobei der Rahmen (10) in der Lage ist, an ein Fahrzeug gekoppelt zu werden, und wobei der Unterrahmen (14) mittels des Hebeaktuators (12) zwischen einer im Wesentlichen horizontalen Betriebsstellung und einer Transportstellung, die winkelig dazu in einer vertikalen Ebene liegt, um das Hebegelenk beweglich ist,
wobei der mindestens eine Unterrahmen (14) um ein Losbrechgelenk (28, 28') von der Betriebsstellung unter Einwirkung einer Losbrechkraft, die im Wesentlichen gegen die Vorgangsrichtung wirkt, in eine losgebrochene Stellung verschwenkbar ist, wobei die losgebrochene Stellung winkelig zu der Betriebsstellung in einer horizontalen Ebene liegt,
wobei die Vorrichtung weiterhin einen Wiedereinstellungsaktuator (30) aufweist, wobei das Losbrechgelenk (28, 28') mittels des Wiedereinstellungsaktuators (30) von einer losgebrochenen Gelenkstellung, die zu der losgebrochenen Stellung des Unterrahmens (14) gehört, in eine betriebsbereite Gelenkstellung, die zu der Betriebsstellung des Unterrahmens (14) gehört, wiedereinstellbar ist, **dadurch gekennzeichnet, dass**
der Hebeaktuator (12) und der Wiedereinstellungsaktuator (30) in einer solchen Weise wirkend miteinander verbunden sind, dass beim Einschalten des Hebeaktuators (12) der Wiedereinstellungsaktuator (30) ebenfalls automatisch eingeschaltet wird.

2. Vorrichtung nach Anspruch 1, **dadurch gekennzeichnet, dass** der Hebeaktuator (12) einen ersten Druckzylinder aufweist, und dass der Wiedereinstellungsaktuator (30) einen zweiten Druckzylinder aufweist, wobei die Druckzylinder wirkend miteinander verbunden sind.

3. Vorrichtung nach Anspruch 2, **dadurch gekennzeichnet, dass** der erste Druckzylinder und der zweite Druckzylinder jeweils einen Hydraulikzylinder mit einer Kammer für ein Hydraulikmedium aufweisen, wobei die Kammern miteinander verbindbar und vorzugsweise miteinander verbunden sind.

4. Vorrichtung nach einem der vorhergehenden Ansprüche, **dadurch gekennzeichnet, dass** der Wiedereinstellungsaktuator (30) ein Federmittel aufweist, das dazu ausgebildet ist, das Losbrechgelenk (28, 28') mittels des Wiedereinstellungsaktuator automatisch von der losgebrochenen Gelenkstellung in die betriebsbereite Gelenkstellung wiedereinzustellen.

5. Vorrichtung nach Anspruch 4, **dadurch gekennzeichnet, dass** das Federmittel eine mechanische Feder oder eine Gasfeder aufweist.

6. Vorrichtung nach Anspruch 4 oder 5, **dadurch gekennzeichnet, dass** das Federmittel einstellbar ist.

7. Vorrichtung nach einem der vorhergehenden Ansprüche, **dadurch gekennzeichnet, dass** der Rahmen (10) dazu ausgebildet ist, an eine Dreipunktaufhängung gekoppelt zu werden.

8. Vorrichtung nach Anspruch 7, **dadurch gekennzeichnet, dass** der Rahmen mindestens zwei Kopplungsverbindungen (24, 26, 42) aufweist, von denen jede dazu ausgebildet ist, an einem der beiden unteren Kopplungspunkte der Dreipunktaufhängung gekoppelt zu werden.

9. Vorrichtung nach einem der vorhergehenden Ansprüche, weiterhin mit mindestens einer Hebevorrichtung (24, 26, 28, 28', 52, 54), die wirkend mit dem Losbrechgelenk verbunden ist und die ausgebildet ist, um mindestens einen Teil des Unterrahmens (14) beim Verschwenken in die losgebrochene Stellung nach oben zu bewegen.

10. Vorrichtung nach Anspruch 9, **dadurch gekennzeichnet, dass** die Hebevorrichtung (24, 26, 28, 28', 52, 54) und das Losbrechgelenk (28, 28') integriert sind.

11. Vorrichtung nach einem der Ansprüche 9 bis 10, **dadurch gekennzeichnet, dass** die Kopplungspunkte (24, 26) um entsprechende im Wesentlichen parallele Achsen verschwenkbar, insbesondere in entgegengesetzte Richtungen klappbar, sind, wobei der Unterrahmen (14) kippbar ist.

12. Vorrichtung nach einem der vorhergehenden Ansprüche, weiterhin mit einem Hebelkraftbegrenzer (48, 50), der ausgebildet ist, um das Losbrechgelenk (28, 28') nur dann von der Betriebsstellung in die losgebrochene Stellung zu verschwenken, wenn eine Hebelkraft der Losbrechkraft einen vorbestimmten Wert bezogen auf das Losbrechgelenk (28, 28') überschreitet.

13. Vorrichtung nach einem der Ansprüche 2 bis 12, **dadurch gekennzeichnet, dass** der Hebelkraftbegrenzer ein Druckbegrenzungsventil oder vorzugsweise eine mechanische Feder (48) oder eine Gasfeder aufweist.

14. Vorrichtung nach Anspruch 13, **dadurch gekennzeichnet, dass** der Hebelkraftbegrenzer (48) einen einstellbaren Wert besitzt.

15. Fahrzeug mit einer Vorrichtung nach einem der vorhergehenden Ansprüche.

16. Fahrzeug nach Anspruch 15, **dadurch gekennzeichnet, dass** die Vorrichtung eine Bearbeitungsoberfläche aufweist, die sich nur an einer Seite bis jenseits einer Seite des Fahrzeugs erstreckt.

17. Fahrzeug nach Anspruch 15 oder 16, **dadurch gekennzeichnet, dass** mindestens eine Vorrichtung eine Mähvorrichtung (20) aufweist.

## Revendications

1. Dispositif destiné à mettre en oeuvre une opération agricole dans une direction de travail et, en particulier, le traitement d'une culture reposant sur le sol,
dans lequel le dispositif comprend :
un châssis (10) avec un actionneur de levage (12), une charnière de levage (22) et au moins un châssis secondaire (14) avec au moins un élément de traitement de culture (20),
dans lequel le châssis (10) peut être couplé à un véhicule et dans lequel le châssis secondaire (14) peut être déplacé au moyen de l'actionneur de levage (12) autour de la charnière de levage (22) entre une position de travail sensiblement horizontale et une position de transport qui forme un certain angle par rapport à cette dernière dans un plan vertical,
dans lequel au moins le châssis secondaire (14) peut pivoter autour d'une charnière de retrait (28, 28') depuis la position opérationnelle vers une position rétractée sous l'action d'un effort de retrait agissant sensiblement à l'opposé de la direction de travail, la position rétractée étant agencée sous un certain angle par rapport à la position de travail dans un plan horizontal,
dans lequel le dispositif comprend en outre un actionneur de réglage (30), la charnière de retrait (28, 28') pouvant être réglée au moyen de l'actionneur de réglage (30) depuis une position de charnière rétractée appartenant à la position rétractée du châssis secondaire (14) vers une position de charnière opérationnelle appartenant à la position opérationnelle du châssis secondaire (14),
**caractérisé en ce que** l'actionneur de levage (12) et l'actionneur de réglage (30) sont couplés en utilisation de telle manière que, lorsque l'actionneur de levage (12) est activé, l'actionneur de réglage (30) est aussi activé automatiquement.

2. Dispositif selon la revendication 1, **caractérisé en ce que** l'actionneur de levage (12) comprend un premier vérin sous pression et **en ce que** l'actionneur de réglage (30) comprend un second vérin sous pression, lesquels vérins sous pression sont couplés en utilisation.

3. Dispositif selon la revendication 2, **caractérisé en ce que** le premier vérin sous pression et le second vérin sous pression comprennent chacun un vérin hydraulique avec une chambre pour fluide hydraulique, lesquelles chambres peuvent être couplées mutuellement et sont, de préférence, couplées mutuellement.

4. Dispositif selon l'une quelconque des revendications précédentes, **caractérisé en ce que** l'actionneur de réglage (30) comprend un moyen élastique qui est conçu afin de régler la charnière de retrait (28, 28') de manière automatique depuis la position de charnière rétractée vers la position de charnière opérationnelle au moyen de l'actionneur de réglage.

5. Dispositif selon la revendication 4, **caractérisé en ce que** le moyen élastique comprend un ressort mécanique ou un ressort à gaz.

6. Dispositif selon la revendication 4 ou 5, **caractérisé en ce que** le moyen élastique est réglable.

7. Dispositif selon l'une quelconque des revendications précédentes, **caractérisé en ce que** le châssis (10) est conçu de manière à être couplé à un élément de liaison à trois points.

8. Dispositif selon la revendication 7, **caractérisé en ce que** le châssis comprend au moins deux points de couplage (24, 26, 42), chacun d'eux est conçu de manière à être couplé à l'un parmi deux points de couplage inférieurs de l'élément de liaison à trois points.

9. Dispositif selon l'une quelconque des revendications précédentes, comprenant en outre au moins un dispositif de levage (24, 26, 28, 28', 52, 54) qui est couplé en utilisation à la charnière de retrait et qui est conçu de manière à déplacer au moins une partie du châssis secondaire (14) vers le haut lors du pivotement vers la position de retrait.

10. Dispositif selon la revendication 9, **caractérisé en ce que** le dispositif de levage (24, 26, 28, 28', 52, 54) et la charnière de retrait (28, 28') sont intégrés.

11. Dispositif selon l'une quelconque des revendications 9 à 10, **caractérisé en ce que** deux points de couplage (24, 26) peuvent pivoter autour d'axes sensiblement parallèles respectifs pouvant, en particulier, être articulés dans des directions opposées, le châssis secondaire (14) pouvant être basculé.

12. Dispositif selon l'une quelconque des revendications précédentes, comprenant en outre un limiteur d'effort de levier (48, 50) qui est conçu de manière à faire pivoter la charnière de retrait (28, 28') depuis la position opérationnelle vers la position de retrait uniquement si un effort de levier de l'effort de retrait excède une valeur prédéterminée par rapport à la charnière de retrait (28, 28').

13. Dispositif selon l'une quelconque des revendications 2 à 12, **caractérisé en ce que** le limiteur d'effort de levier comprend un clapet de surpression ou, de préférence, un ressort mécanique (48) ou un ressort à gaz.

14. Dispositif selon la revendication 13, **caractérisé en ce que** le limiteur d'effort de levier (48) présente une valeur réglable.

15. Véhicule comportant au moins un dispositif selon l'une quelconque des revendications précédentes.

16. Véhicule selon la revendication 15, **caractérisé en ce que** le dispositif comporte une surface de traitement qui s'étend uniquement au niveau d'un premier côté au delà d'un côté du véhicule.

17. Véhicule selon la revendication 15 ou 16, **caractérisé en ce qu'**au moins un dispositif comprend un dispositif de fauchage (20).
